# EUROPÄISCHE PATENTSCHRIFT

(11) **EP 1 152 910 B1**
(45) Veröffentlichungstag und Bekanntmachung des Hinweises auf die Patenterteilung: **12.05.2004**
(21) Anmeldenummer: 00993395.3
(22) Anmeldetag: 15.12.2000
(51) Int. Cl.: B60G 7/00, F16B 17/00

(54) **KRAFTFAHRZEUGBAUTEIL**
AUTOMOBILE COMPONENT
COMPOSANT DE VEHICULE AUTOMOBILE

(30) Priorität: 17.12.1999 DE 19961425
(43) Veröffentlichungstag der Anmeldung: 14.11.2001
(73) Patentinhaber: ZF Lemförder Metallwaren AG, 49441 Lemförde (DE)
(72) Erfinder: ABELS, Olaf, 49191 Belm (DE)
(86) Internationale Anmeldenummer: PCT/DE2000/004480
(87) Internationale Veröffentlichungsnummer: WO 2001/044002

(56) Entgegenhaltungen:
- EP-A- 0 712 741
- EP-A- 0 713 791
- PATENT ABSTRACTS OF JAPAN vol. 1998, no. 06, 30. April 1998 (1998-04-30) & JP 10 035235 A (SHOWA ALUM CORP), 10. Februar 1998 (1998-02-10)
- PATENT ABSTRACTS OF JAPAN vol. 1998, no. 03, 27. Februar 1998 (1998-02-27) & JP 09 286217 A (SHOWA ALUM CORP;TOKAI RUBBER IND LTD), 4. November 1997 (1997-11-04)
- PATENT ABSTRACTS OF JAPAN vol. 1999, no. 09, 30. Juli 1999 (1999-07-30) & JP 11 099415 A (UNIPRES CORP;SHOWA ALUM CORP), 13. April 1999 (1999-04-13)
- PATENT ABSTRACTS OF JAPAN vol. 1999, no. 09, 30. Juli 1999 (1999-07-30) & JP 11 101286 A (TOKAI RUBBER IND LTD;SHOWA ALUM CORP), 13. April 1999 (1999-04-13)
- PATENT ABSTRACTS OF JAPAN vol. 1999, no. 03, 31. März 1999 (1999-03-31) & JP 10 324123 A (TOKAI RUBBER IND LTD;SHOWA ALUM CORP), 8. Dezember 1998 (1998-12-08)
- PATENT ABSTRACTS OF JAPAN vol. 017, no. 607 (M-1507), 9. November 1993 (1993-11-09) & JP 05 185171 A (HONDA MOTOR CO LTD), 27. Juli 1993 (1993-07-27)

## Beschreibung

Die Erfindung betrifft ein Kraftfahrzeugbauteil wie es beispielsweise für Querlenker oder auch als Hilfsrahmen zum Einsatz kommen kann.

Die Notwendigkeit der Einsparung fossiler Brennstoffe, zu denen auch Kraftstoffe für Kraftfahrzeuge zählen, ist nicht nur aus Umweltschutzgründen sondern auch aus ökonomischer Sicht erforderlich, um den schwindenden Reserven und den damit ansteigenden Kosten für diese Energieträger zu begegnen.
Eine Möglichkeit, fossile Brennstoffe im Automobilbau einzusparen besteht beispielsweise darin, gewichtsreduziert zu konstruieren. Deshalb werden zunehmend Bauteile mit möglichst geringem Eigengewicht eingesetzt. Ein Lösungsansatz besteht darin, anstelle der üblichen Stahlbauvarianten alternative Materialien, wie Aluminium oder Magnesium für die Kraftfahrzeugbauteile zu verwenden.

Natürlich müssen die erforderlichen Sicherheitsanforderungen trotzdem erfüllt werden, was bei Einsatz dieser Materialien eigentlich widersprüchlich erscheint. Ein Ausweg sind Sandwichbauteile mit Schaumkernen oder fachwerkartig gestaltete Ausführungen.

Zur Herstellung der Kraftfahrzeugbauteile aus Aluminium oder Magnesium werden häufig Schmiedeverfahren angewendet, die vergleichsweise kostenintensiv sind und zudem den Nachteil haben, dass beispielsweise flache Bauformen mit dünnen Wandstärken und fachwerkartige Konstruktionen nur mit unverhältnismäßig hohem Aufwand realisiert werden können.

Im Kraftfahrzeugbau sind darüber hinaus Querlenker bekannt, die aus einer stranggepressten Fachwerkkonstruktion bestehen. Diese Ausführungen haben jedoch den Nachteil, dass die zur Herstellung der Hohlkörper notwendigen Kerne von Stegen gehalten werden müssen. Die Stege hinterlassen im Gefüge des Lenkers Strangpressnähte.
Derartige Strangpressnähte bergen die Gefahr von Fehlstellen im Gefüge, welche nur mit unverhältnismäßig hohem Quatitätsprüfungsaufwand ermittelbar sind. Hierzu ist beispielsweise eine zerstörungsfreie Werkstoffprüfung (Ultraschalluntersuchung) anwendbar, was jedoch im Fertigungsprozeß zeitaufwendig und damit kostenintensiv ist. Werden diese Untersuchungen nicht bei jedem Bauteil durchgeführt, bergen die möglichen Fehlstellen in den Strangpressnähten Sicherheitsrisiken, die für Sicherheitsbauteile im Kraftfahrzeugbau nicht akzeptabel sind.

Aus der gattungsgemäßen JP 10035235 A ist ein Kraftfahrzeugbauteil bekannt, das aus wenigstens zwei Rahmenteilen besteht, die mehrere komplementäre und ineinander einsetzbare Profile zur Herstellung einer formschlüssigen Verbindung der Rahmenteile aufweisen. Die Rahmenteile können nach der Druckschrift als Aluminium-Strangpressprofile in Leichtbauweise ausgeführt und durch ein Schweissverfahren miteinander verbunden sein.

Darüber hinaus sind aus der JP 09286217 A, der JP 11099415 A, der JP 11101286 A, der JP 10324123 A, der JP 05155171 A und der EP 0 712 741 A1 jeweils Kraftfahrzeugbauteile bekannt, die aus wenigstens zwei Rahmenteilen bestehen, die mehrere komplementäre und ineinander einsetzbare Profile zur Herstellung einer formschlüssigen Verbindung der Rahmenteile aufweisen. Zum Teil weisen die in den genannten Druckschriften offenbarten Lösungen Versteifungsrippen auf, die jedoch bereits bei der Herstellung der Rahmenteile an diese angeformt werden, also einteilig mit den Rahmenteilen ausgeführt sind.

Der Erfindung liegt die technische Problemstellung zugrunde, Kraftfahrzeugbauteile zu schaffen, die mit geringem Materialaufwand kostengünstig herstellbar sind, dennoch die erforderlichen Sicherheitsanforderungen erfüllen und nach Fertigstellung ihrer Einzelteile möglichst variabel gestaltet werden können.

Gelöst wird diese technische Problemstellung mit den Merkmalen des Patentanspruches 1.

Danach besteht ein erfindungsgemäßes Kraftfahrzeugbauteil aus wenigstens zwei Rahmenteilen, die mehrere zueinander komplementäre und ineinander einsetzbare Profile zur Herstellung einer formschlüssigen Verbindung der Rahmenteile aufweisen.

Wesentlich für die Erfindung ist, dass zwischen die Rahmenteile nachträglich Versteifungsrippen in Form einer Fachwerkstruktur eingesetzt werden können.

Der entscheidende Vorteil einer erfindungsgemäßen Lösung besteht somit darin, dass die einzelnen Rahmenteile getrennt voneinander und gegebenenfalls mit unterschiedlichen Herstellungsverfahren produziert werden können, um sie anschließend zu vereinen, was beispielsweise mittels einer einfachen Steck- oder Schnappverbindung erfolgen kann. Infolge ihrer formschlüssigen Verbindung kann eine Nachbearbeitung der Rahmenteile entfallen. Es sind beliebige Profilausführungen denkbar. Ferner ist eine fachwerkartige Konstruktion umsetzbar, was dem Leichtbauerfordernis in vorteilhafter Weise entgegenkommt.
Durch die Möglichkeit, Versteifungsrippen je nach Bedarf in die Rahmenteile einzusetzen, ergibt sich der Vorteil, dass das Kraftfahrzeugbauteil beispielsweise in Form eines Baukastensystems hergestellt werden kann, wobei die Versteifungsrippen belastungsabhängig differierende Wandstärken aufweisen und auch aus unterschiedlichen Werkstoffen bestehen können. Die Zahl der Versteifungsrippen kann darüber hinaus für die einzelnen Fallgestaltungen der erfindungsgemäßen Kraftfahrzeugbauteile variieren.

Weitere Ausgestaltungen der Erfindung sind Gegenstand der Unteransprüche.

So wird in Weiterführung des Erfindungsgedankens vorgeschlagen, die Rahmenteile als Strangpressprofile in Leichtbauweise auszuführen. Das Strangpressverfahren ist ein sehr ökonomisches Fertigungsverfahren mit dem die Kraftfahrzeugbauteile auch als Großserienausführung herstellbar sind.

Darüber hinaus ist es vorteilhaft, die zueinander komplementären Profile als Führungen zu gestalten, die in an sich bekannter Weise Flachführungen, Schwalbenschwanzführungen, Prismenführungen oder ähnliche sein können. Um die Profile unlösbar miteinander zu verbinden, bietet sich ein Pressverband an, sodass schon beim Ineinanderfügen der Rahmenteile ein Festsitz erreicht wird. Der Pressverband besteht in an sich bekannter Weise aus einer Passverbindung, bei der ein geringfügig untermaßiges Bauteil ein übermäßiges aufnimmt.

Selbstredend können auch andere Verbindungsverfahren zum Einsatz kommen. Gedacht ist hierbei beispielsweise an Schweißen, Kleben oder eine partielle Materialverformung im Bereich der ineinandergreifenden Profile.

Ferner liegt es im Bereich des Erfindungsgedankens, die Verbindung der beiden Rahmenteile im Bereich der ineinander einsetzbaren Profile mittels einer Klammer gegeneinander zu sichern. Diese Klammer wird nach dem Zusammenfügen der Rahmenteile über die entsprechenden Partien geschoben und kann ihrerseits gesichert beziehungsweise festgesetzt werden.

Vorteilhaft ist es darüber hinaus, das Kraftfahrzeugbauteil insgesamt oder teilweise aus Aluminium oder Magnesium bzw. aus Kunststoff herzustellen, wobei eine Verbindung mehrerer Werkstoffarten selbstverständlich im Bereich des Erfindungsgedankens liegt. So wäre es beispielsweise denkbar, die Rahmenteile als Aluminiumstrangpressprofile herzustellen und zwischen diesen Rahmenteilen Versteifungsrippen aus Kunststoff einzusetzen.

Ausführungsformen werden nachstehend unter Bezugnahme auf die zugehörigen Zeichnungen näher erläutert.
Es zeigen:
- Figur 1:: einen Querlenker für ein Kraftfahrzeug in der Draufsicht,
- Figur 2a:: eine ausschnittsweise vergrößerte Ansicht eines Teiles des Querlenkers entsprechend des mit II-a gekennzeichneten Ausschnittes in Figur 1,
- Figur 2b:: eine ausschnittsweise vergrößerte Ansicht eines Teiles des Querlenkers entsprechend des mit II-b gekennzeichneten Ausschnittes in Figur 1
- Figur 2c:: eine ausschnittsweise vergrößerte Ansicht eines Teiles des Querlenkers entsprechend des mit II-c gekennzeichneten Ausschnittes in Figur 1
- Figur 3:: eine dreidimensionale Darstellung eines Querlenkers für ein Kraftfahrzeug,
- Figur 4:: eine weitere Ausführungsvariante eines Querlenkers für ein Kraftfahrzeug,
- Figur 5:: eine dreidimensionale Darstellung eines Querlenkers entsprechend der Ausführung in Figur 4, wobei Figuren 4, 5 vollumfänglich unter dem Wortlaut des Anspruuchs 1 fallen
und
- Figur 6:: eine ausschnittsweise vergrößerte Darstellung einer Befestigungsmöglichkeit der Rahmenteile.

In den Figuren sind beispielhaft Ausführungen von Kraftfahrzeugbauteilen dargestellt, wie sie insbesondere als Querlenker für die Radaufhängung von Kraftfahrzeugen zum Einsatz kommen können. Die gezeigten Querlenkerausführungen sind als Aluminiumstrangpressprofile in Leichtbauweise hergestellt.

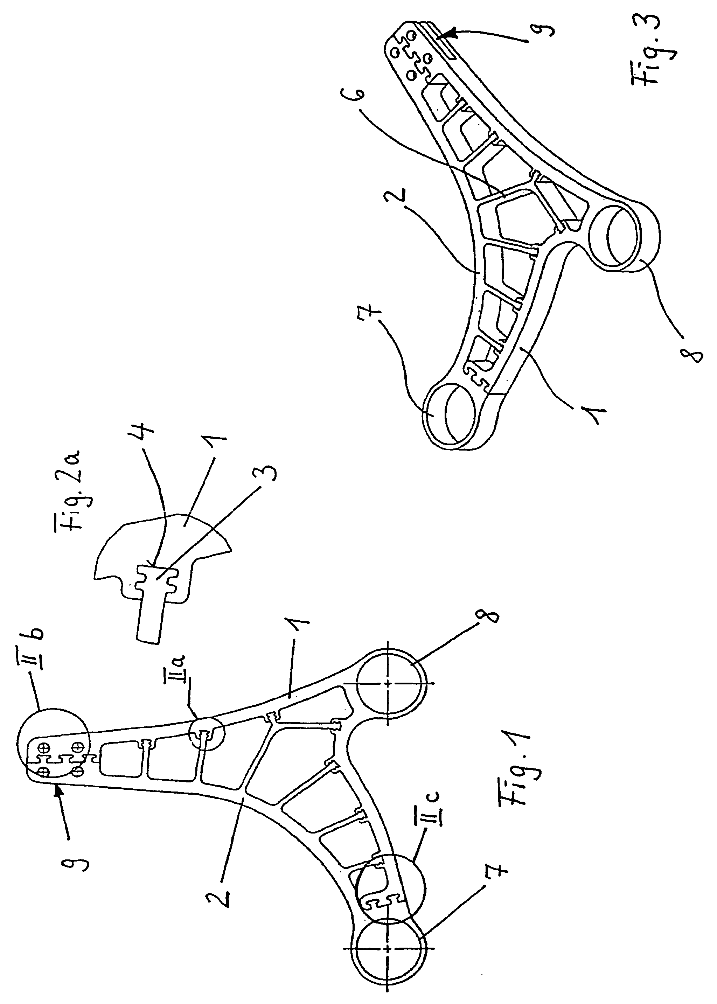

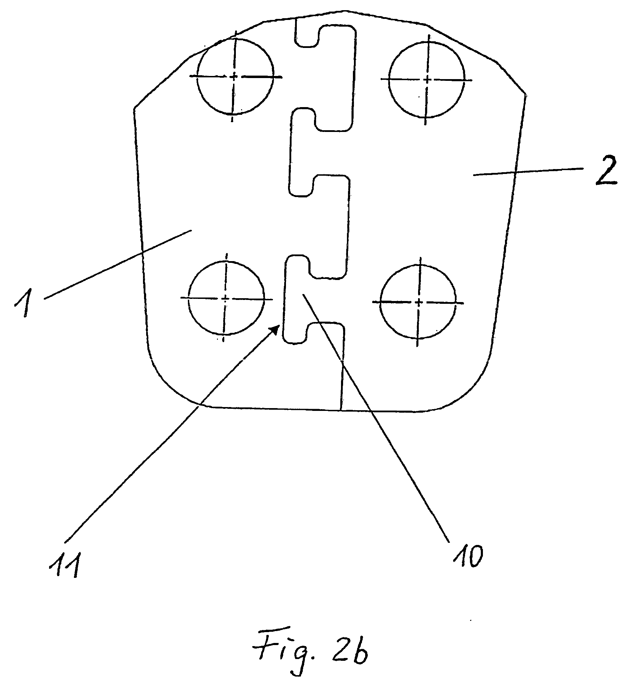

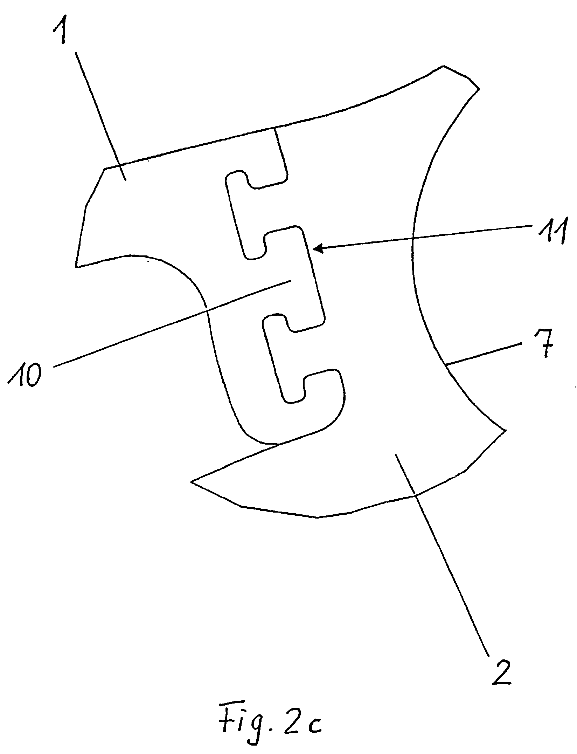

In den Figuren 1 bis 3 bestehen die Querlenker aus zwei Rahmenteilen 1 und 2, an denen Öffnungen 7 und 8 zur Aufnahme weiterer Kraftfahrzeugbauteile (beispielsweise Kugelgelenke) angeformt sind. Auf der den Öffnungen gegenüber liegenden Seite ist ferner ein Anschluß 9 in die Rahmenteile 1 und 2 eingebracht. Die Rahmenteile 1 und 2 weisen zahlreiche zueinander komplementäre Profile 3, 4, 10 und 11 auf, welche ineinander einsetzbar sind und eine formschlüssige Verbindung bilden. Mit 10 ist dabei ein Profil bezeichnet, das eine T-Form aufweist und in eine passende Ausnehmung 11 eingesetzt ist. Die Verbindung der Profile 3, 4, 10 bzw. 11 ist jeweils vergrößert in den Figuren 2a, 2 b und 2c veranschaulicht.
An dem Rahmenteil 2 sind darüber hinaus mehrere Versteifungsrippen 6 einstückig angeformt. Im Endbereich dieser Versteifungsrippen 6 ist, wie deutlich aus der Figur 2a hervorgeht, jeweils ein kammartiges Profil 3 an der Verstreifungsrippe 6 angeformt. Dieses wird beim Zusammenfügen der Rahmenteile 1 und 2 jeweils in eine komplementäre, im Rahmenteil 1 hierfür vorhandene Aufnahme 4 eingesetzt.
Bei der gezeigten Ausführung weist das Profil 3 eine Doppel-T-Form auf, die in der entsprechenden Aufnahme 4 aufgenommen ist. Zur formschlüssigen Verbindung wurde zwischen den Profilen 3, 4, 10, 11 jeweils ein Presssitz gewählt. Die Profile 10, 11 der Rahmenteile 1 und 2 sind im Bereich des Anschlusses 9 sowie wenigstens einer der Öffnungen 7 bzw. 8 miteinander verbunden, wie dies aus den Figuren 2b und 2c ersichtlich ist.

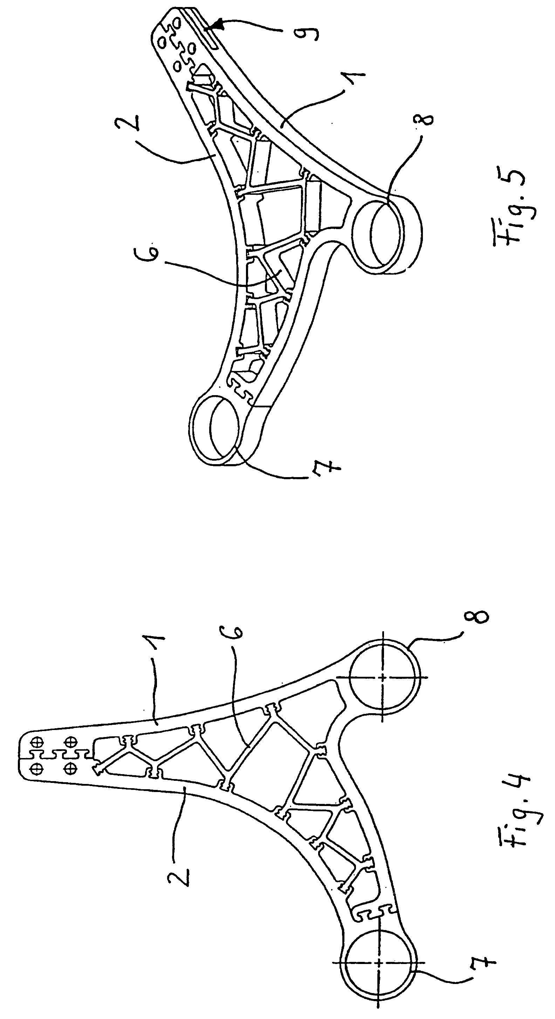

In den Figuren 4 und 5 ist eine erfindungsgemäße Ausführungsvariante eines Querlenkers in Leichtbauweise für ein Kraftfahrzeug dargestellt. In der Figur 4 ist eine Draufsicht und in der Figur 5 eine räumliche Darstellung zu sehen. Der gezeigte Querlenker für ein Kraftfahrzeug besteht hierbei aus zwei Rahmenteilen 1 und 2 mit den bereits zuvor beschriebenen Öffnungen 7 und 8 zur Anbindung des Querlenkers an die Radaufhängungsteile des Kraftfahrzeuges sowie einem Anschlußbereich 9, der den Öffnungen 7 und 8 gegenüberliegend angeordnet ist. Die Rahmenteile 1 und 2 stehen über eine T-förmige Profilverbindung 10, 11 miteinander in Eingriff. Diese formschlüssige Verbindung zwischen den Rahmenteilen 1 und 2 befindet sich einerseits im Bereich der Öffnung 7 und andererseits im Bereich des Anschlusses 9.
Darüber hinaus weisen beide Rahmenteile 1 und 2 jeweils über ihren Innenumfang verteilt mehrere Aufnahmen 4 auf In diese Aufnahmen 4 sind Versteifungsrippen 6 eingesetzt, deren endseitiges Profil 3 formschlüssig in die Aufnahmen 4 eingreift. Zur festsitzenden Verbindung zwischen den Versteifungsrippen 6 und den Aufnahmen 4 der Rahmenteile 1 und 2 kann auch hier in der zuvor beschriebenen Weise ein Pressverbund zum Einsatz kommen. Die Ausführung eines Kraftfahrzeugbauteiles gemäß der Darstellung in den Figuren 4 und 5 gestattet eine variable Gestaltung. So kann den gestellten Anforderungen entsprechend die Zahl der Versteifungsrippen 6 variieren. In dem gezeigten Ausführungsbeispiel der Figuren 4 und 5 wurde eine in sich geschlossene Struktur von Versteifungsrippen 6 zwischen die Rahmenteile 1 und 2 gesetzt. Ebenso sind selbstverständlich mehrere einzelne Versteifungsrippen zwischen die Rahmenteile 1 und 2 einfügbar, sodaß hier der Gestaltungsfreiheit große Freiräume gelassen sind.

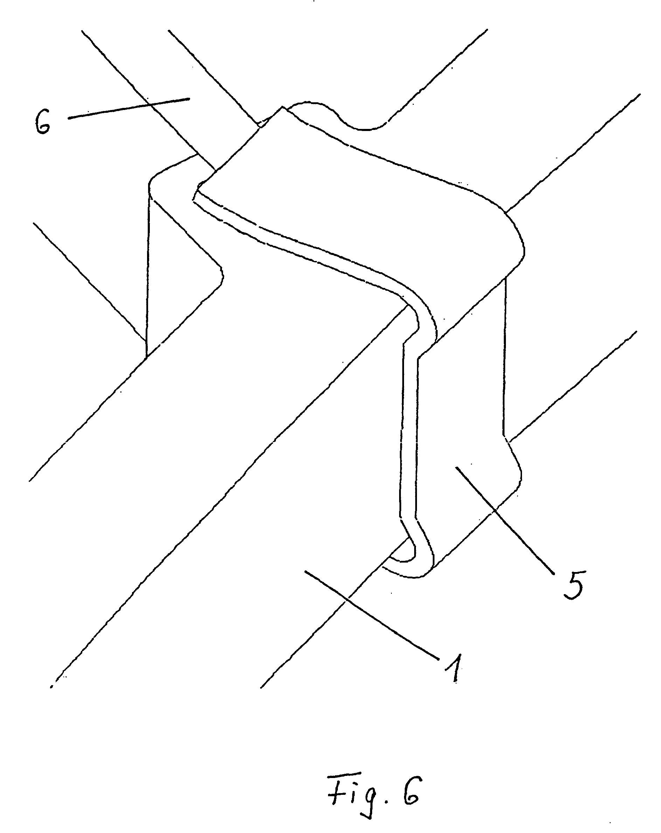

Die Darstellung der Figur 6 zeigt noch einmal eine mögliche Ausführung der Sicherung der Einzelteile eines erfindungsgemäßen Kraftfahrzeugbauteiles. Dabei wurde über die Versteifungsrippe 6 im Bereich der komplementär ineinandergreifenden Profile 3 und 4 eine Klammer 5 auf das Rahmenteil 1 gesetzt, das hier ausschnittsweise gezeigt ist. Eine solche Klammer kann unterstützend für den Zusammenhalt der ineinanderzufügenden Bauteile zum Einsatz kommen.

Die beschriebene erfindungsgemäße Verbindung der Rahmenteile gestattet eine fertigungstechnisch sehr einfache Überwachungsmöglichkeit zur Ermittlung von Fehlstellen, sodaß ein Höchstmaß an Qualitätsstandard erreicht und gesichert werden kann. Die erfindungsgemäßen Kraftfahrzeugbauteile sind gewichtsoptimiert und erfüllen dennoch die an sie gestellten Sicherheitsanforderungen, wie Stabilität und Festigkeit oder Verwindungssteifheit. Sie sind flexibel einsetzbar, da durch ein zusätzliches oder nachträgliches Einfügen von Versteifungsrippen die Festigkeit in beliebiger Weise verändert werden kann. Somit lassen sich die erfindungsgemäßen Kraftfahrzeugbauteile sehr kostengünstig und einfach herstellen.

### Bezugszeichenliste:

- 1: Rahmenteile
- 2: Rahmenteile
- 3: Profil
- 4: Profil (Aufnahme)
- 5: Klammer
- 6: Versteifungsrippe
- 7: Öffnung
- 8: Öffnung
- 9: Anschluß
- 10: Profil
- 11: Profil (Ausnehmung)

## Patentansprüche

1. Kraftfahrzeugbauteil bestehend aus wenigstens zwei Rahmenteilen (1, 2), die mehrere komplementäre und ineinander einsetzbare Profile (3, 4, 10, 11) zur Herstellung einer formschlüssigen Verbindung der Rahmenteile (1, 2) aufweisen
**dadurch gekennzeichnet, dass**
zwischen die Rahmenteile (1, 2) Versteifungsrippen (6) in Form einer Fachwerkstruktur eingesetzt sind.

2. Kraftfahrzeugbauteil nach Anspruch 1,
**dadurch gekennzeichnet, dass**
die Rahmenteile (1, 2) Strangpressprofile in Leichtbauweise sind.

3. Kraftfahrzeugbauteil nach Anspruch 1 oder 2,
**dadurch gekennzeichnet, dass**
die Profile (3, 4, 10, 11) aus Führungen, wie Flachführungen, Schwalbenschwanzführungen oder Prismenführungen bestehen.

4. Kraftfahrzeugbauteil nach Anspruch 3,
**dadurch gekennzeichnet, dass**
die Profile (3, 4, 10, 11) eine durch Schweißen, Kleben, partielle Materialverformung oder einen Pressverband hergestellte Sicherung gegen selbsttätiges Lösen aufweisen.

5. Kraftfahrzeugbauteil nach Anspruch 3,
**dadurch gekennzeichnet, dass**
die Rahmenteile (1, 2) mittels einer Klammer (5) gegeneinander verspannt sind.

6. Kraftfahrzeugbauteil nach einem der vorhergehenden Ansprüche,
**dadurch gekennzeichnet, dass**
die Anzahl sowie der Querschnitt der Versteifungsrippen (6) in Form eines Baukastensystems belastungsabhängig frei wählbar ist und für die einzelnen Bestandteile unterschiedliche Werkstoffe einsetzbar sind.

7. Kraftfahrzeugbauteil nach einem der vorhergehenden Ansprüche
**dadurch gekennzeichnet, dass**
das Kraftfahrzeugbauteil zumindest teilweise aus Magnesium, Aluminium und/oder Kunststoff besteht.

## Claims

1. Motor vehicle component consisting of at least two frame parts (1, 2), which comprise a plurality of complementary and intermateable profiles (3, 4, 10, 11) for establishing a keyed connection of the frame parts (1, 2)
**characterized in that**
reinforcing ribs (6) in the form of a lattice structure are inserted between the frame parts (1, 2).

2. Motor vehicle component according to claim 1,
**characterized in that**
the frame parts (1, 2) are extruded sections of a lightweight construction.

3. Motor vehicle component according to claim 1 or 2,
**characterized in that**
the profiles (3, 4, 10, 11) comprise guides, such as flat guides, dovetail guides or Vee-guides.

4. Motor vehicle component according to claim 3,
**characterized in that**
the profiles (3, 4, 10, 11) comprise an anti-detachment element produced by welding, glueing, partial material deformation or an interference fit.

5. Motor vehicle component according to claim 3,
**characterized in that**
the frame parts (1, 2) are braced together by means of a clamp (5).

6. Motor vehicle component according to one of the preceding claims,
**characterized in that**
the number as well as the cross section of the reinforcing ribs (6) in the form of a modular system is freely selectable in dependence upon the load and different materials are usable for the individual component parts.

7. Motor vehicle component according to one of the preceding claims,
**characterized in that**
the motor vehicle component is made at least in part of magnesium, aluminium and/or plastics material.

## Revendications

1. Composant de véhicule automobile constitué d'au moins deux parties de cadre (1, 2) qui comportent plusieurs profilés (3, 4, 10, 11) complémentaires et pouvant être insérés les uns dans les autres pour réaliser une liaison par complémentarité de forme des parties de cadre (1, 2), **caractérisé en ce que** des raidisseurs (6) sous la forme d'une structure à treillis sont insérés entre les parties de cadre (1, 2).

2. Composant de véhicule automobile selon la revendication 1, **caractérisé en ce que** les parties de cadre (1, 2) sont des profilés extrudés de construction légère.

3. Composant de véhicule automobile selon la revendication 1 ou 2, **caractérisé en ce que** les profilés (3, 4, 10, 11 ) sont constitués de guides, tels que guides plats, guides à queue d'aronde ou guides prismatiques.

4. Composant de véhicule automobile selon la revendication 3, **caractérisé en ce que** les profilés (3, 4, 10, 11) possèdent une sécurité contre un déverrouillage automatique, réalisée par soudage, collage, déformation partielle de matière ou par sertissage.

5. Composant de véhicule automobile selon la revendication 3, **caractérisé en ce que** les parties de cadre (1, 2) sont serrées l'une contre l'autre au moyen d'une agrafe (5).

6. Composant de véhicule automobile selon l'une des revendications précédentes, **caractérisé en ce que** le nombre ainsi que la section transversale des raidisseurs (6) peuvent être choisis librement, en fonction des contraintes, sous la forme d'un système modulaire et différents matériaux peuvent être utilisés pour les différentes parties constitutives.

7. Composant de véhicule automobile selon l'une des revendications précédentes, **caractérisé en ce que** le composant de véhicule automobile est constitué au moins en partie de magnésium, aluminium et/ou d'une matière plastique.
